(19) Europäisches Patentamt
European Patent Office
Office européen des brevets

(11) Veröffentlichungsnummer: **0 056 151**
**B1**

# (12) EUROPÄISCHE PATENTSCHRIFT

(45) Veröffentlichungstag der Patentschrift: **10.04.85**

(51) Int. Cl.[4]: **D 06 M 16/00**, C 11 D 3/48

(21) Anmeldenummer: **81110797.8**

(22) Anmeldetag: **28.12.81**

## (54) Verfahren zur antimikrobiellen Ausrüstung von Textilien.

(30) Priorität: **09.01.81 DE 3100470**

(43) Veröffentlichungstag der Anmeldung: **21.07.82 Patentblatt 82/29**

(45) Bekanntmachung des Hinweises auf die Patenterteilung: **10.04.85 Patentblatt 85/15**

(84) Benannte Vertragsstaaten: **AT BE CH DE FR GB IT LI NL**

(56) Entgegenhaltungen: **GB - A - 1 508 425**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**
Patentinhaber: **BAYER AG, Konzernverwaltung RP Patentabteilung, D-5090 Leverkusen 1 Bayerwerk (DE)**

(72) Erfinder: **Hennemann, Manfred, Hofstrasse 154a, D-4010 Hilden (DE)**
Erfinder: **Andree, Hans, Dr., Landrat-Trimborn-Strasse 25, D-5653 Leichlingen (DE)**
Erfinder: **Lehmann, Rudolf, Dr., Fröbelstrasse 4 a, D-4040 Neuss (DE)**
Erfinder: **Schnegelberger, Harald, Dr., Stieglitzweg 2, D-5653 Leichlingen (DE)**
Erfinder: **Bellinger, Horst, Dr., Schumannstrasse 83, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Es ist in vielen Fällen wünschenswert, Textilien, insbesondere solche Textilien, die beim Tragen mit der Haut in Kontakt kommen, antimikrobiell auszurüsten. Eine derartige Ausrüstung ist geeignet, manche Hauterkrankungen, wie zum Beispiel Pilzinfektionen zu vermeiden, deren Ausbreitung zu verhindern. Eine antimikrobielle Ausrüstung von Textilien durch Zusatz von antimikrobiell wirksamen Substanzen zu Waschmitteln scheiterte bisher daran, dass derartige Wirkstoffe bei der Wäsche wie Schmutz in der Waschlauge verbleiben und dadurch nicht auf die auszurüstenden Textilien gelangen.

Es wurde nun überraschenderweise gefunden, dass eine antimikrobielle Ausrüstung von Textilien während des Wasch- und Weichmachungsvorgangs möglich ist, wenn man während des gleichzeitigen Waschens und Weichmachens von Textilien mit einem flüssigen Textilwaschmittel auf Basis von nichtionischen Tensiden und textilweichmachenden quartären Ammoniumverbindungen dem Waschmittel oder der Waschflotte eine oder mehrere antimikrobiell wirksame Azolverbindungen zusetzt. Bei diesen Verbindungen handelt es sich um bekannte Azol-Antimikrobika; besonders geeignete Verbindungen sind ausgewählt aus der Gruppe

a)

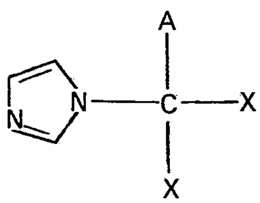

(I)

worin X die Phenylgruppe und A entweder die Gruppe $-C\equiv CH$ oder die Gruppe $-COOCH_3$ oder die Gruppe $-C(CH_3)_3$ bedeutet.

b)

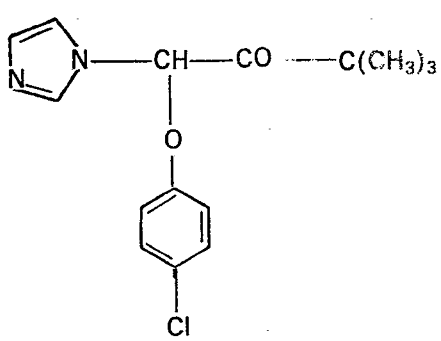

(II)

c)

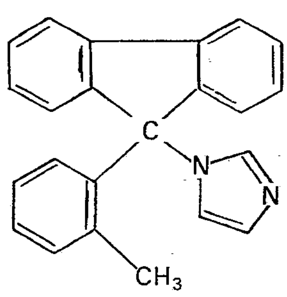

(III)

d)

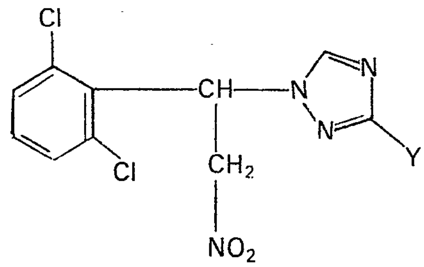

(IV)

worin Y entweder Wasserstoff oder Chlor bedeutet.

Offenbar ziehen diese Antimikrobika infolge der gleichzeitigen Anwesenheit der textilweichmachenden quartären Ammoniumverbindungen in der Waschflotte in einem nicht geklärten Mechanismus auf die Textilien auf und verbleiben dort während des Waschvorgangs und auch während der nachfolgenden Spülgänge in einer Menge, die deutlich antimikrobiell wirksam ist.

Bei den geeigneten antimikrobiell wirksamen Verbindungen handelt es sich um Azolderivate, die als Antimikrobika bekannt sind (vergl. DE-C-19 08 991, DE-A-20 07 794, DE-A-20 09 020, DE-A-24 30 039, DE-A-22 60 704). Die Natur der in dem für das erfindungsgemässe Verfahren geeigneten textilweichmachenden quartären Ammoniumverbindungen ist offenbar nicht kritisch; so haben sich beispielsweise vom Imidazolin und vom Ammoniak abgeleitete Verbindungen mit 2 oder 3 langen Alkyl-Resten, die substituiert oder durch Heteroatome unterbrochen sein können, bewährt, darunter auch das wegen seiner guten weichmachenden Wirkung weit verbreitete Dimethyl-ditalgalkylammoniumchlorid. Als nichtionisches Tensid ist zum Beispiel eine Tensid-Kombination aus einem längerkettigen Oxo-Alkohol-Ethoxylat mit bestimmter Kettenlänge und bestimmtem Ethoxylierungsgrad und einem kürzerkettigen Oxo- oder Fettalkohol-Ethoxylat mit ebenfalls einem bestimmten Ethoxylierungsgrad geeignet. Diese beiden nichtionischen Tenside sind in einer bestimmten Konzentration und in einem bestimmten Verhältnis sowohl zueinander als auch zu der textilweichmachenden quartären Ammoniumverbindung des für die Durchführung des erfindungsgemässen Verfahrens geeigneten flüssigen Waschmittels enthalten. Derartige Waschmittel, allerdings ohne einen Gehalt an antimikrobiell wirksamen Azolverbindungen sind in der DE-A-28 17 834 beschrieben; sie enthalten

a) 5–18 vorzugsweise 10–12,5 Gew.-% eines Alkylpolyglykoläthers der Formel

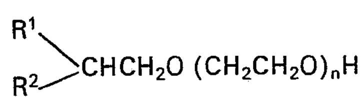

(I)

in der $R^1$ eine geradkettige Alkylgruppe und $R^2$ zu 20 bis 75 Gew.-% – bezogen auf den dem Alkylpolyglykoläther zugrunde liegenden Alkohol – eine $C_1$–$C_4$-Alkylgruppe und im übrigen Wasserstoff bedeuten, wobei die Gesamtzahl der Kohlenstoffatome in $R^1$ und $R^2$ 11–15 vorzugsweise

11–13 beträgt, und n einen Wert von 5–9 bedeutet, und wobei n so ausgewählt ist, dass der Ethylenoxidanteil des Alkylpolyglykoläthers etwa 50–65 vorzugsweise 55–65 Gew.-% beträgt,

b) 5–18, vorzugsweise 10–12,5 Gew.-% eines Alkylpolyglykoläthers der Formel I, in der $R^1$ eine geradkettige Alkylgruppe mit vorzugsweise 7–10 Kohlenstoffatomen und $R^2$ entweder vorzugsweise Wasserstoff, oder zu 20–75 Gew.-% – bezogen auf den dem Alkylpolyglykoläther zugrunde liegenden Alkohol – eine $C_1$–$C_4$-Alkylgruppe und im übrigen Wasserstoff bedeuten, wobei die Gesamtzahl der Kohlenstoffatome in $R^1$ und $R^2$ 6–10 beträgt und n einen Wert von 3–8 bedeutet, und wobei n so ausgewählt ist, dass der Äthylenoxidanteil des Alkylpolyglykoläthers etwa 55–70, vorzugsweise 60–70 Gew.-% beträgt,

c) 2,5–10, vorzugsweise 2,5–5 Gew.-% eines textilweichmachenden quartären Ammoniumsalzes, ausgewählt aus den Derivaten des Ammoniaks und/oder des Imidazolins mit vorzugsweise 2 langkettigen aliphatischen Resten im Molekül, insbesondere Dimethyl-ditalgalkyl-ammoniumchlorid,

d) Rest Wasser und organische Lösungsmittel sowie gegebenenfalls weitere übliche, in geringen Mengen anwesende Zusätze wie zum Beispiel Farb- und Duftstoffe, hydrotrope Mittel, Komplexierungsmittel für Schwermetallspuren sowie Konservierungs-, Trübungs- und Viskositätsstellmittel.

Zur Durchführung des erfindungsgemässen Verfahrens setzt man soviel an den bekannten Azolverbindungen zu, dass die Waschmittel 0,1 bis 1,5 Gew.-% der Azol-Antimikrobika enthalten. Man kann die Azol-Antimikrobika in entsprechenden Mengen aber auch getrennt von den Waschmitteln beispielsweise in Form einer wässrigen oder nichtwässrigen Lösung oder Dispersion der Waschflotte zusetzen. Das Verfahren kann man entweder in der Waschmaschine oder auch von Hand bei Temperaturen bis zu etwa 40 °C Waschlaugentemperatur durchführen.

Die Anwendungskonzentration der flüssigen Mittel liegt im allgemeinen zwischen 2 und 20 ml/l Waschlauge, vorzugsweise bei 3 bis 6 ml/l; die Konzentration der antimikrobiellen Wirkstoffe wählt man dabei so, dass in einem l Waschflotte etwa 0,0004 bis 0,06 g der Azolverbindung vorhanden sind. Die nach dem erfindungsgemässen Verfahren gewaschenen Textilien aus verschiedenen natürlichen und synthetischen Fasern, insbesondere Baumwolle, weisen nach dem Trocknen ausgesprochene antimikrobielle Wirkung auf; besonders ausgeprägt ist die Wirkung gegenüber Trichophyton mentagrophytes; Trichophyton rubrum und Microsporum gypseum, so dass auf diesem Wege eine Vorbeugung gegenüber Pilzerkrankungen durch das Tragen von erfindungsgemäss gewaschenen Textilien möglich ist. Es wurde auch festgestellt, dass die Textilien eine deutlich verringerte Neigung zur Ausbildung von Stockflecken aufweisen. Darüberhinaus erzielt man eine einwandfreie Schmutzentfernung bei gleichzeitiger Weichmachung von Textilien.

## Beispiele

Zur Prüfung der antimikrobiellen Wirksamkeit wurde die erfindungsgemässe Ausrüstung der Textilien wie folgt vorgenommen:

2×2 cm grosse Stücke Baumwoll-Gewebe wurden bei einem Flottenverhältnis von 1 g Gewebe auf 10 ml Flotte von 30 °C, die 4 g Waschmittel der nachstehenden Zusammensetzung pro l Flotte enthielt, 5 beziehungsweise 15 Minuten lang behandelt. Anschliessend wurde das Testgewebe 2-mal in sterilem Leitungswasser gespült und bei 37 °C getrocknet. Die getrockneten Textilproben wurden auf mit Trichophyton mentagrophytes, Trichophyton rubrum und Microsporum gypseum beimpfte Agaroberflächen für 30 Minuten aufgelegt und danach auf einen zweiten Ort umgelegt. Anschliessend wurden die Kulturen bei 30 °C bis zum Eintritt guten Wachstums gebrütet (7 Tage) und die eventuellen antimikrobiellen Effekte abgelesen. Dabei bedeuten:

| | |
|---|---|
| + | = Wachstum unter dem Gewebe |
| 0 | = kein Hemmhof, kein Wachstum unter dem Gewebe |
| Zahl | = Hemmhof in mm um das Gewebe bzw. um den 1. Kontaktort |
| () | = unscharfer Hemmhof |

Das Waschmittel hatte die folgende Zusammensetzung:

| | | |
|---|---|---|
| 11,0 | Gew.-% | $C_{10}$–$C_{12}$-Fettalkohol-Ethoxylat mit 60 Gew.-% Ethylenoxid («Lorol $C_{10/12}$/6 EO$^{(R)}$», Henkel) |
| 8,5 | Gew.-% | $C_{14}$–$C_{15}$-Oxoalkohol-Ethoxylat mit 58 Gew.-% Ethylenoxid («Dobanol 45–7$^{(R)}$ «Shell») |
| 4,0 | Gew.-% | Di-(hydriertes Talgalkyl-)dimethyl-ammoniumchlorid («Präpagen WK$^{(R)}$» Hoechst) |
| 0–1,25 | Gew.-% | Azol-Antimikrobika (s. Tab. 1) |
| 0,2 | Gew.-% | Ethylendiamintetraessigsäure, Tetranatriumsalz |
| 4,0 | Gew.-% | Ethanol/Isopropanol |
| 3,0 | Gew.-% | 1,2-Propylenglykol |
| 0,1 | Gew.-% | Formalin |
| geringe Mengen | | Farbstoff, Duftstoff, Viskositätsstellmittel |
| Rest | | Wasser |

Die antimikrobiell wirksame Azolverbindung wurde in Konzentrationen von 0, 0,25, 0,625 und 1,25 Gew.-% (bezogen auf das Waschmittel) eingesetzt (Beispiele 1a bis 4a der Tabelle 1). Diese Versuche wurden wiederholt mit einem Waschmittel ohne textilweichmachende quartäre Ammoniumverbindung (Beispiele 1b bis 4b der Tabelle 1). Der antimikrobielle Wirkstoff war die Verbindung

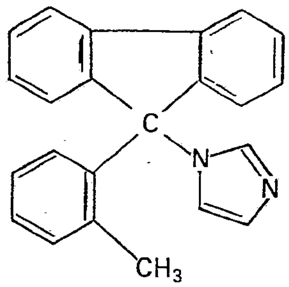

| Keimart | | Trichophyton mentagroph | | | | Trichophyton rubrum | | | | Microsp. gypseum. | | | |
|---|---|---|---|---|---|---|---|---|---|---|---|---|---|
| Behandlung | | 5 Min. | | 15. Min. | | 5 Min | | 15 Min. | | 5 Min. | | 15 Min. | |
| Bsp. | Azol-Verb | Kontaktort | | | | Kontaktort | | | | Kontaktort | | | |
| Nr. | % | 1. | 2. | 1. | 2. | 1. | 2. | 1. | 2. | 1. | 2. | 1. | 2. |
| 1a | 0 | + | 0 | + | 3 | + | 0 | + | (2) | + | 0 | + | 0 |
| b | | + | 0 | + | 0 | + | 0 | + | 1 | + | 0 | + | 0 |
| 2a | 0,25 | 10 | 11 | 10 | 12 | 9(16) | 14(21) | 10(18) | 12(24) | 12 | 14 | 7(12) | 12 |
| b | | + | 2 | + | 2 | + | 5(10) | 0 | 7(15) | + | 1(4) | + | 1(3) |
| 3a | 0,625 | + | 5(7) | + | 4(8) | 7 | 7(14) | 7 | 7(14) | + | 2(7) | + | 4(7) |
| b | | + | 4 | + | 3(6) | (6) | 7(13) | 0 | 7(16) | + | 3 | + | 2(4) |
| 4a | 1,25 | + | 10(17) | + | 7(12) | 3(7) | 11(19) | 3(7) | 12(20) | + | 6(11) | + | 5(11) |
| b | | + | 5(8) | + | 7 | + | 10(15) | (4) | 11(17) | + | 4(7) | + | 5(7) |

Ähnliche Ergebnisse erhält man, wenn man statt der antimikrobiellen Verbindung der Beispiele 1 bis 4 andere der bekannten Azol-Antimikrobika und statt der textilweichmachenden quartären Ammoniumverbindung der Beispiele 1 bis 4 andere übliche weichmachende quartäre Ammoniumverbindungen verwendet, beispielsweise Imidazoliniumverbindungen vom Typ des Blandofen FA 75, GAF.

## Patentansprüche

1. Verfahren zur antimikrobiellen Ausrüstung von Textilien während des Wasch- und Weichmachungsvorganges unter Verwendung von flüssigen Textilwaschmitteln auf Basis von nichtionischen Tensiden und textilweichmachenden quartären Ammoniumverbindungen dadurch gekennzeichnet, dass man dem Textilwaschmittel oder der Waschflotte eine oder mehrere antimikrobiell wirksame Azolverbindungen zusetzt, vorzugsweise solche, die ausgewählt sind, aus der Gruppe der folgenden Verbindungen:

a)

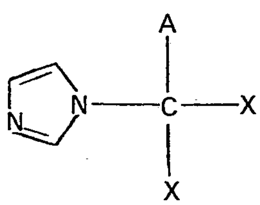

(I)

worin X die Phenylgruppe und A entweder die Gruppe $-C\equiv CH$ oder die Gruppe $-COOCH_3$ oder die Gruppe $-C(CH_3)_3$ bedeutet.

b)

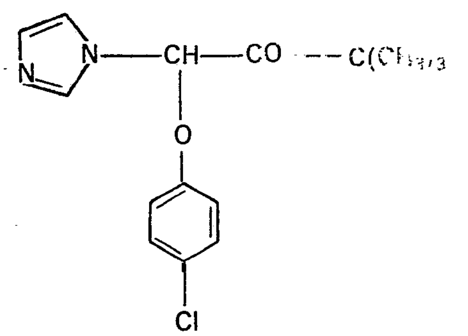

(II)

c)

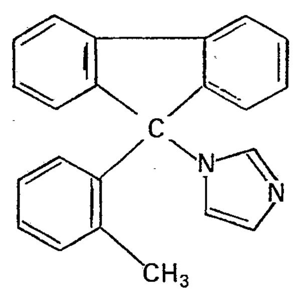

(III)

d)

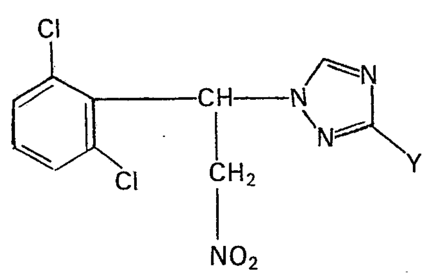

(IV)

worin Y entweder Wasserstoff oder Chlor bedeutet.

2. Verfahren nach Anspruch 1, dadurch gekennzeichnet, dass man ein Waschmittel auf Basis von nichtionischen Tensiden und textilweichmachenden quartären Ammoniumverbindungen mit einem Gehalt an

a) 5–18 vorzugsweise 10–12,5 Gew.-% eines Alkylpolyglykoläthers der Formel

$$\genfrac{}{}{0pt}{}{R^1}{R^2}\!\!>CHCH_2O(CH_2CH_2O)_nH \qquad (I)$$

in der $R^1$ eine geradkettige Alkylgruppe und $R^2$ zu 20 bis 75 Gew.-% bezogen auf den dem Alkylpolyglykoläther zugrunde liegenden Alkohol – eine $C_1$–$C_4$-Alkylgruppe und im übrigen Wasserstoff bedeuten, wobei die Gesamtzahl der Kohlenstoffatome in $R^1$ und $R^2$ 11–15 vorzugsweise 11–13 beträgt, und n einen Wert von 5–9 bedeutet, und wobei n so ausgewählt ist, dass der Ethylenoxidanteil des Alkylpolyglykoläthers etwa 50–65 vorzugsweise 55–65 Gew.-% beträgt,

b) 5–18, vorzugsweise 10–12,5 Gew.-% eines Alkylpolyglykoläthers der Formel I, in der $R^1$ eine geradkettige Alkylgruppe mit vorzugsweise 7–10 Kohlenstoffatomen und $R^2$ entweder vorzugsweise Wasserstoff, oder zu 20–75 Gew.-% – bezogen auf den dem Alkylpolyglykoläther zugrunde liegenden Alkohol – eine $C_1$–$C_4$-Alkylgruppe und im übrigen Wasserstoff bedeuten, wobei die Gesamtzahl der Kohlenstoffatome in $R^1$ und $R^2$ 6–10 beträgt und n einen Wert von 3–8 bedeutet, und wobei n so ausgewählt ist, dass der Äthylenoxidanteil des Alkylpolyglykoläthers etwa 55–70, vorzugsweise 60–70 Gew.-% beträgt,

c) 2,5–10, vorzugsweise 2,5–5 Gew.-% eines textilweichmachenden quartären Ammoniumsalzes, ausgewählt aus den Derivaten des Ammoniaks und/oder des Imidazolins mit vorzugsweise 2 langkettigen aliphatischen Resten im Molekül, insbesondere eines Dimethyl-ditalgalkyl-ammonium-chlorid,

d) 0,1 bis 1,5 Gew.-% Azol-Antimikrobika

e) Rest Wasser und organische Lösungsmittel sowie gegebenenfalls weitere übliche, in geringen Mengen anwesende Zusätze wie zum Beispiel Farb- und Duftstoffe, hydrotrope Mittel, Komplexierungsmittel für Schwermetallspuren sowie Konservierungs-, Trübungs- und Viskositätsstellmittel verwendet.

3. Verfahren nach den Ansprüchen 1 und 2, dadurch gekennzeichnet, dass man pro l Waschlauge 2–20 ml, vorzugsweise 3–6 ml Waschmittel mit einem Gehalt an 0,1 bis 1,5 Gew.-% Azol-Antimikrobika verwendet.

4. Verfahren nach den Ansprüchen 1 bis 3, dadurch gekennzeichnet, dass man die Behandlung bei Temperaturen bis zu etwa 40 °C vornimmt.

**Revendications**

1. Procédé d'apprêtage antimicrobien des textiles pendant le processus de lavage et d'assouplissement avec utilisation d'agents de lavage textiles liquides à base de tensioactifs non ioniques et de composés d'ammonium quaternaire assouplissants des textiles, caractérisé en ce qu'on ajoute à l'agent de lavage des textiles ou au bain de lavage un ou plusieurs composés azol à activité antimicrobienne, de préférence ceux qui sont choisis dans le groupe des composés suivants:

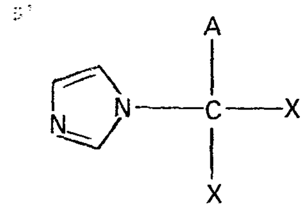

(I)

dans laquelle X signifie le groupe phényle et A soit le groupe $-C\equiv CH$, ou le groupe $-COOCH_3$, ou le groupe $-C(CH_3)_3$,

b)

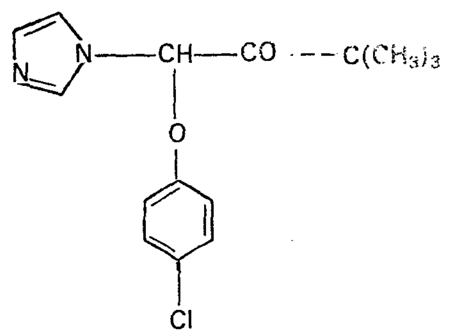

(II)

c)

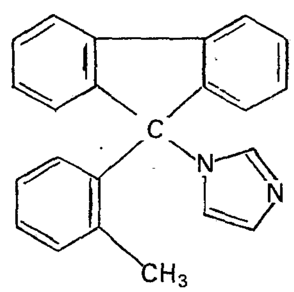

(III)

d)

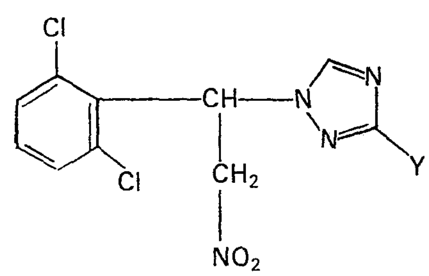

(IV)

dans laquelle Y signifie de l'hydrogène ou bien du chlore.

2. Procédé selon la revendication 1, caractérisé en ce qu'on utilise un agent de lavage à base de tensioactifs non ioniques et de composés d'ammonium quaternaire assouplissants des textiles ayant une teneur de

a) 5–18, de préférence 10–12,5% en poids d'un alcoylpolyglycol-éther de formule

$$\genfrac{}{}{0pt}{}{R^1}{R^2}\!\!>CHCH_2O(CH_2CH_2O)_nH \qquad (I)$$

dans laquelle $R^1$ signifie un groupe alcoyle à chaîne droite et $R^2$ à raison de 20 à 75% en poids – par rapport à l'alcool à la base de l'acoylpolyglycol-éther – un groupe alcoyle en $C_1$–$C_4$ et pour le restant de l'hydrogène, le nombre total des atomes de carbone dans $R^1$ et $R^2$ s'élevant à 11–15, de préférence à 11–13, n signifiant une valeur de 5–9 et n étant choisi pour que la proportion d'oxyde d'éthylène de l'alcoylpolyglycol-éther s'élève à environ 50–65, de préférence à 55–65% en poids,

b) 5–18, de préférence 10–12,5% en poids d'un alcoylpolyglycol-éther de formule I dans laquelle $R^1$ signifie un groupe alcoyle à chaîne droite ayant de préférence 7–10 atomes de carbone et $R^2$ soit de préférence de l'hydrogène ou, à raison de 20–75% en poids – par rapport à l'acool à la base de l'alcoylpolyglycol-éther – un groupe alcoyle en $C_1$–$C_4$ et pour le restant de l'hydrogène, le nombre total des atomes de carbone dans $R^1$ et $R^2$ s'élevant à 6–10 et n signifiant une valeur de 3–8, n étant choisi pour que la proportion d'oxyde d'éthylène de l'alcoylpolyglycol-éther s'élève à environ 55–70, de préférence à 60–70%,

c) 2,5–10, de préférence 2,5–5% en poids d'un sel d'ammonium quaternaire assouplissant des textiles, choisi parmi les dérivés de l'ammoniac et/ou de l'imidazoline avec de préférence 2 radicaux aliphatiques à longue chaîne dans la molécule, en particulier d'un chlorure de diméthyl-dialcoyl(de suif)-ammonium,

d) 0,1 à 1,5% en poids d'antimicrobien azol

e) le restant étant de l'eau et des solvants organiques de même qu'éventuellement d'autres additifs usuels employés en petites quantités, comme par exemple des colorants et des parfums, des agents hydrotropes, des agents complexeurs pour traces de métaux lourds ainsi que des agents de conservation, de réglage du trouble et de la viscosité.

3. Procédé selon les revendications 1 et 2, caractérisé en ce qu'on utilise par litre de liqueur de lavage 2–20 ml, de préférence 3–6 ml d'agent de lavage ayant une teneur de 0,1 à 1,5% en poids d'agent antimicrobien azol.

4. Procédé selon les revendications 1 à 3, caractérisé en ce qu'on entreprend le traitement à des températures allant jusqu'environ 40 °C.

## Claims

1. A process for the antimicrobial finishing of fabrics during washing and softening using liquid fabric detergents based on nonionic surfactants and fabric-softening quaternary ammonium compounds, characterized in that one or more antimicrobially active azole compounds, preferably selected from the group comprising the following compounds:

a)

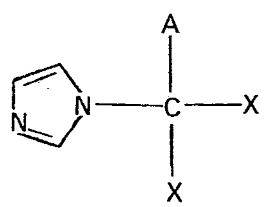

(I)

in which X is the phenyl group and A is either the group $-C{\equiv}CH$ or the group $-COOCH_3$ or the group $-C(CH_3)_3$,

b)

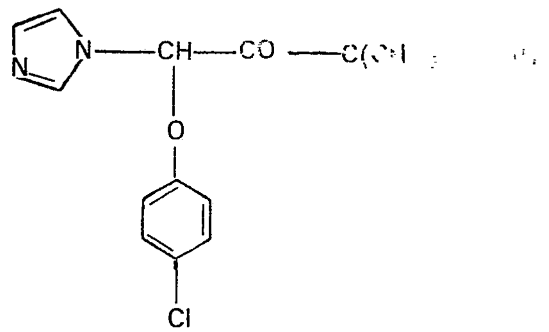

c)

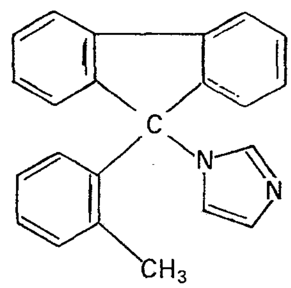

(III)

d)

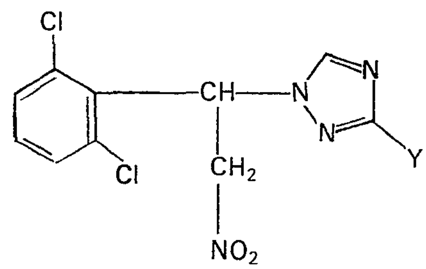

(IV)

in which Y is either hydrogen or chlorine, are added to the fabric detergent or to the wash liquor.

2. A process as claimed in Claim 1, characterized in that a detergent based on nonionic surfactants and fabric-softening quaternary ammonium compounds and containing

a) from 5 to 18 and preferably from 10 to 12.5% by weight of an alkyl polyglycol ether corresponding to the following formula

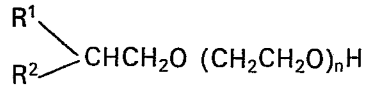

(I)

in which $R^1$ is a straight-chain alkyl group and from 20 to 75% by weight of $R^2$, based on the alcohol of the polyglycol ether, is a $C_1$–$C_4$ alkyl group, the remainder being hydrogen, the total number of carbon atoms in $R^1$ and $R^2$ amounting to between 11 and 15 and preferably to between 11 and 13, and n has a value of from 5 to 9, n being selected so that the ethylene oxide content of the alkyl polyglycol ether amounts to between about 50 and 65% by weight and preferably to between 55 and 65% by weight,

b) from 5 to 18 and preferably from 10 to 12.5% by weight of an alkyl polyglycolether of formula I, in which $R^1$ is a straight-chain alkyl group preferably containing from 7 to 10 carbon atoms and $R^2$ is either preferably hydrogen or from 20 to 75% by weight of $R^2$, based on the alcohol of the alkyl polyglycol ether, is a $C_1$–$C_4$ alkyl group and the remainder is hydrogen, the total number of carbon atoms in $R^1$ and $R^2$ being 6–10, and n has a value of from 3 to 8, n being selected so that the ethylene oxide content of the alkyl polyglycol ether is between about 55 and 70 and preferably between 60 and 70% by weight,

c) from 2.5 to 10 and preferably from 2.5 to 5% by weight of a fabric-softening quaternary ammonium salt selected from derivatives of ammonia and/or imidazoline preferably containing 2 long-chain aliphatic residues in the molecule, more particularly a dimethyl ditallow alkyl ammonium chloride,

d) from 0.1 to 1.5% by weight of azole microbicides,

e) remainder water and organic solvents and, optionally, other standard additives used in small quantities, such as for example dyes and perfumes, hydrotropic agents, complexing agents for heavy metal traces and also preservatives, opacifiers and viscosity regulators is used.

3. A process as claimed in Claims 1 and 2, characterized in that from 2 to 20 ml and preferably from 3 to 6 ml of detergent containing from 0.1 to 1.5% by weight of azole microbicides is used per l of wash liquor.

4. A process as claimed in Claims 1 to 3, characterized in that the treatment is carried out at temperatures of up to about 40 °C.